# EUROPEAN PATENT APPLICATION

(11) **EP 4 398 005 A1**
(43) Date of publication of application: **10.07.2024**
(21) Application number: 21955983.8
(22) Date of filing: 01.09.2021
(51) Int. Cl.: G02B 5/02, G01S 7/481

(54) **OPTICAL ELEMENT AND OPTICAL SYSTEM DEVICE USING SAME**

(71) Applicant: Scivax Corporation, Kawasaki-shi, Kanagawa 212-0032 (JP)
(72) Inventor: OGAWA Daiki, Kawasaki-shi Kanagawa 212-0032 (JP); NAWATA Akifumi, Kawasaki-shi Kanagawa 212-0032 (JP); AWAYA Nobuyoshi, Kawasaki-shi Kanagawa 212-0032 (JP); TANAKA Satoru, Kawasaki-shi Kanagawa 212-0032 (JP)
(74) Representative: Gille Hrabal Partnerschaftsgesellschaft mbB Patentanwälte
(86) International application number: PCT/JP2021/032171
(87) International publication number: WO 2023/032094

(57) **Abstract**

an objective is to provide an optical element which has no discontinuous portion between adjacent lenses, and which suppresses a reduction of a light efficiency and also an occurrence of variability in light distribution due to diffusion, etc. An optical element capable of diffusing incident light to a predetermined diffusion range, and includes a transparent body including concavity-and-convexity on at least one surface. The diffusion range is defined as an internal side of a singular closed curved line on a predetermined plane. The concavity-and-convexity includes a plurality of crests and valleys without a periodicity. When it is defined that a wavelength of the light is λ, a refractive index of the transparent body is n₁, and a refractive index of a medium around the transparent body is n₀, the concavity-and-convexity has no portion where a gradient of the concavity-and-convexity changes by 180 degrees within a range in which a width is λ/(n₁ - n₀). A region of the concavity-and-convexity with the gradient causing the incident light to be emitted and outgo to a region outside the diffusion range by Snell's law is equal to or smaller than 5 % of the entire region.

## Description

### TECHNICAL FIELD

The present disclosure relates to an optical element and an optical system device using the same.

### BACKGROUND ART

Three-dimensional measurement sensors that utilize a Time Of Flight (TOF) scheme are now to be applied to portable devices, vehicles, and robots, etc. Such a sensor measures a distance from an object based on a time until light emitted by a light source to an object is reflected and returns. When light from the light source is emitted uniformly to the predetermined region of the object, the distance at each point subjected to light emission can be measured, and thus the three-dimensional structure of the object can be detected.

A sensor system for such a purpose includes a light source unit that emits beam (light) to an object, a camera unit that detects reflected light from each point on the object, and an arithmetic unit that calculates a distance from the object in accordance with a signal according to the light received by the camera unit.

As for the camera unit and the arithmetic unit, already-existing CMOS imager and CPU are applicable, respectively, and thus the unique component of the above-described system is the light source unit that includes a light source and a diffusing filter (an optical element). In particular, the distinguishing component of the above-described system is the diffusing filter (the optical element) which shapes a beam by causing light like laser to pass through, and which causes the light to be emitted uniformly within a controlled region to an object.

As for such a diffusing filter (a diffuser) for light distribution control, a scheme that applies a Diffractive Optical Element (DOE), and a scheme that applies a microlens array are known. According to the scheme that applies the DOE, however, it is known that there are many diffusion lights that cannot be controlled, and thus the utilization efficiency of light deteriorates.

Conversely, a microlens array that is applied for a diffusing filter has aspheric lenses with a diameter of several 10 µm placed on the entire filter surface. The microlens-array-type diffusing filter is often designed by deciding a lens that becomes a basic shape on the basis of geometric optics so as to satisfy specifications like a light emitting angle, and by placing such lenses in an array shape. For example, it is desirable that the light emitting angle of the diffusing filter for TOF should be consistent with a viewing angle of a camera. Hence, an array often has a rectangular projection pattern, such as 60 × 45 and 110 × 85. When it is desired to achieve a rectangular projection pattern, a basic pattern with a circular symmetric shape is placed in a grid shape. This facilitates accomplishment of such a distributed light distribution.

However, the microlens array has a disadvantage such that it is difficult to spread light to a wide-angle form. Moreover, when a diffusing filter that includes microlenses placed periodically as same as a VCSEL light source that has lasers arranged periodically on a chip is combined, interfering bars may be produced in a light emission intensity due to a moire effect between the period of the VCSEL and the period of the microlens. In order to suppress such interference, it is necessary to design the placement of the microlens with the VCSEL period being taken into consideration. For example, it is necessary to sufficiently decrease the period of the microlens array in comparison with the general period of the VCSEL. However, the narrower the period of the microlens array is, the more a speckle phenomenon such that lights are concentrated like a dot at a certain site due to an adverse effect of interference of lights is likely to occur.

Moreover, in a diffusing filter that utilizes a microlens array, in order to accomplish optical characteristics without dependence on the placement of the VCSEL, the microlens array may be placed at random (see, for example, Patent Document 1).

### CITATION LIST

### PATENT LITERATURES

Patent Document 1: JP2006-500621A

### SUMMARY OF INVENTION

### TECHNICAL PROBLEM

When, however, the microlens array is placed at random, a discontinuous portion is produced between adjacent lenses, and light that does not contribute to the distributed light distribution is produced by diffusion, etc. Hence, there are technical problems such that the light efficiency decreases and a variability occurs in the distributed light distribution.

Hence, an objective of the present disclosure is to provide an optical element which has no discontinuous portion between adjacent lenses, and which suppresses a reduction of a light efficiency and also an occurrence of variability in light distribution due to diffusion, etc.

### SOLUTION TO PROBLEM

In order to accomplish the above objective, an optical element according to the present disclosure is capable of diffusing incident light to a predetermined diffusion range, and includes:
a transparent body that includes concavity-and-convexity on at least one surface,
in which:
   the diffusion range is defined as an internal side of a singular closed curved line on a predetermined plane;
   the concavity-and-convexity includes a plurality of crests and valleys without a periodicity;
   when a wavelength of the light is defined as λ, a refractive index of the transparent body is defined as n₁, and a refractive index of a medium around the transparent body is defined as n₀, the concavity-and-convexity has no portion where a gradient of the concavity-and-convexity changes by 180 degrees within a range in which a width is λ/(n₁ - n₀); and
   a region of the concavity-and-convexity with the gradient that causes the incident light to be emitted and outgo to a region outside the diffusion range by Snell's law is equal to or smaller than 5 % of an entire region.

In this case, it is preferable that the concavity-and-convexity should be formed in such a way that distributed light distribution calculated by Snell's law monotonically increases from a center of the diffusion range toward a boundary thereof, and more preferably, should be formed in such a way that the distributed light distribution calculated by Snell's law becomes proportional to cos⁻ⁿθ (where 1 ≤ n ≤ 7) from the center of the diffusion range toward the boundary thereof.

It is preferable that the concavity-and-convexity should have a height that is equal to or greater than 2.5 times as much as λ/(n₁ - n₀).

Moreover, an optical system device according to the present disclosure includes:
the optical element of the present disclosure; and
a light source that emits light to the optical element.

### ADVANTAGEOUS EFFECTS OF INVENTION

The optical element and according to the present disclosure and the optical system device using the same have no discontinuous portion between adjacent lenses, and suppress a reduction of a light efficiency and also an occurrence of variability in light distribution due to diffusion, etc.

### BRIEF DESCRIPTION OF DRAWINGS

FIG. 1 is a schematic perspective view illustrating an optical element according to the present disclosure;
FIG. 2 is an enlarged cross-sectional view illustrating the optical element according to the present disclosure;
FIG. 3 is a diagram for describing the refraction by the optical element according to the present disclosure;
FIG.4 is a graph showing a relation between an inclination angle θ₁ of the concavo-convex of an incidence surface and a light emitting angle θ₄ of light from the optical element 1;
FIG. 5 is a schematic plan view illustrating an optical system device according to the present disclosure;
FIG. 6 is a diagram illustrating a light intensity at a camera unit when a light intensity distribution P(θ) is made proportional to cos⁻ⁿθ, i.e., [P(θ)^{∝}cos⁻ⁿθ] (where n is 1 to 7);
FIG. 7 is a diagram illustrating the size of a concavity-and-convexity 11 in part (a), a distributed light distribution by ray-tracing simulation in such a case in part (b), and a distributed light distribution by electromagnetic field simulation in part (c);
FIG. 8 is a diagram illustrating the size of the concavity-and-convexity 11 in part (a), a distributed light distribution by ray-tracing simulation in such a case in part (b), and a distributed light distribution by electromagnetic field simulation in part (c);
FIG. 9 is a diagram illustrating the size of the concavity-and-convexity 11 in part (a), a distributed light distribution by ray-tracing simulation in such a case in part (b), and a distributed light distribution by electromagnetic field simulation in part (c);
FIG. 10 a is diagram illustrating the size of the concavity-and-convexity 11 in part (a), a distributed light distribution by ray-tracing simulation in such a case in part (b), and a distributed light distribution by electromagnetic field simulation in part (c);
FIG. 11 is a diagram illustrating the size of the concavity-and-convexity 11 in part (a), a distributed light distribution by ray-tracing simulation in such a case in part (b), and a distributed light distribution by electromagnetic field simulation in part (c); and
FIG. 12 is a diagram illustrating the size of the concavity-and-convexity 11 in part (a), a distributed light distribution by ray-tracing simulation in such a case in part (b), and a distributed light distribution by electromagnetic field simulation in part (c).

### DESCRIPTION OF EMBODIMENTS

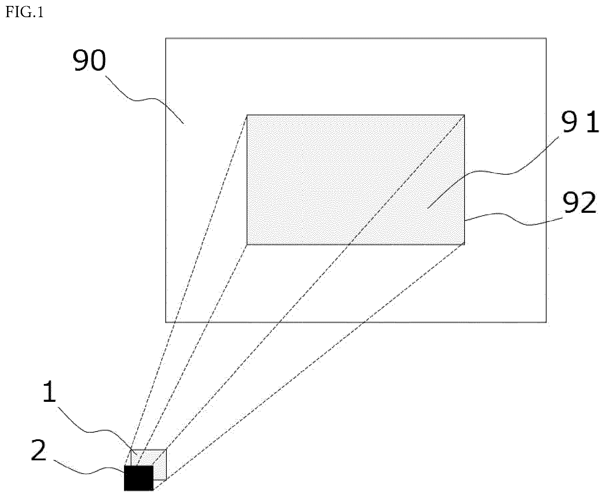

An optical element 1 according to the present disclosure will be described below. As illustrated in FIG. 1, the optical element 1 according to the present disclosure can diffuse incident light to a predetermined diffusion range 91.

In this example, the diffusion range 91 is defined as, on a predetermined plane 90, an internal side of a singular closed curved line 92, such as a polygonal shape or an elliptical shape. Moreover, the predetermined plane 90 in this example means a plane which is perpendicular to an optical axis of a light source that emits light to the optical element, and which is a plane apart from the optical element 1 by at least equal to or greater than 100 times as much as a light size when emitted from the light source 2.

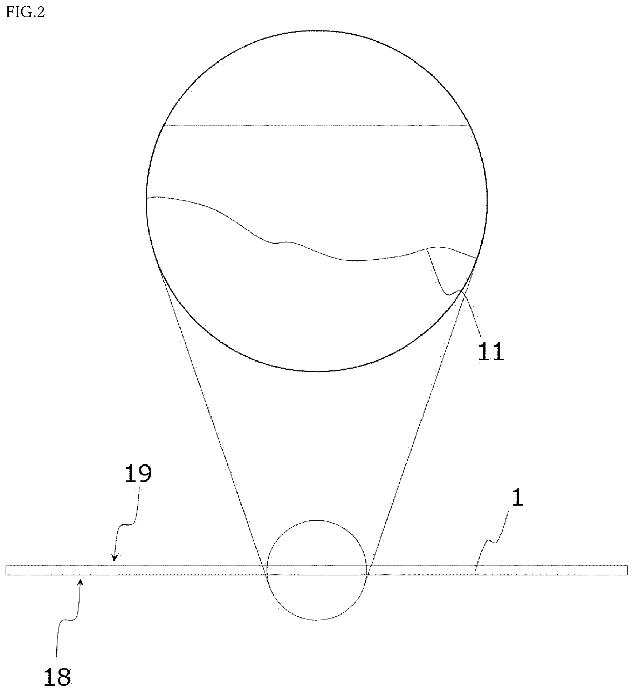

As illustrated in FIG. 2, the optical element 1 is formed of a transparent body that has having concavity-and-convexity 11 on at least one surface. The concavity-and-convexity 11 has a plurality of crests and valleys which have no periodicity.

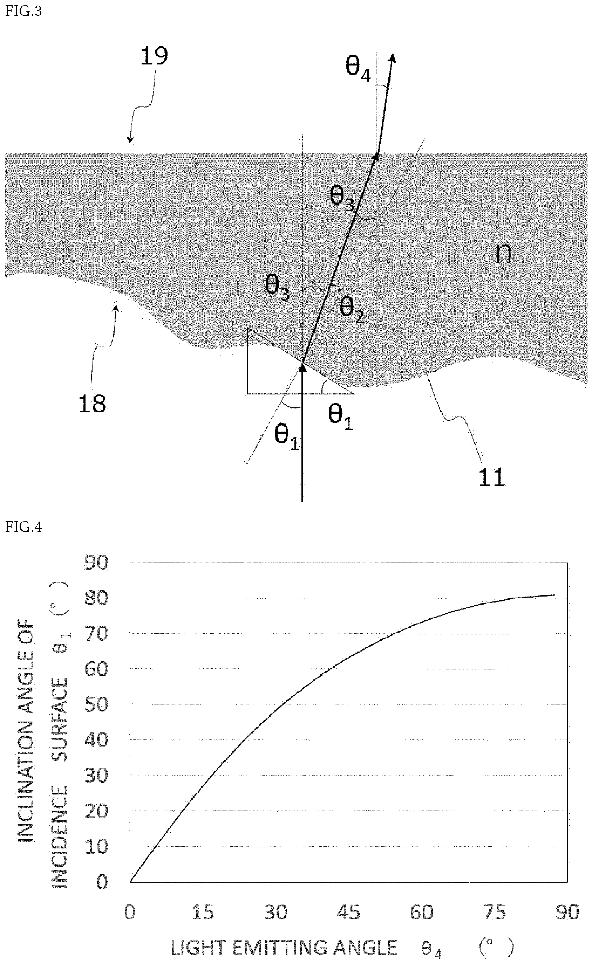

The concavity-and-convexity 11 is formed so as to refract incident light within the diffusion range 91 by Snell's law. This will be described with reference to FIG. 3. In order to facilitate understanding for the description, the optical element 1 which includes an emitting surface 19 that is a plane (an xy plane), and which also includes, on an incidence surface 18, the concavity-and-convexity 11 defined by z = f(x, y) will be examined. Moreover, it is assumed that light perpendicular to the xy plane enters the incidence surface.

First, an incidence angle θ₁ of light to the incidence surface 18 of the optical element 1 and a refraction angle θ₂ of refracting light within the optical element 1 satisfy a relation that is sinθ₁ = nsinθ₂ from Snell's law. Similarly, an incidence angle θ₃ to the emitting surface 19 of the optical element 1 and a refraction angle θ₄ of emitted light to the exterior also satisfy Snell's law. Hence, when the refractive index of optical element 1 is defined as n, sinθ₁ = nsinθ₂ and nsinθ₃ = sinθ₄ are satisfied. Moreover, as illustrated in FIG. 2, θ₃ = θ₁ - θ₂. That is, since the light emitting angle θ₄ can be calculated from Snell's law of the incidence surface 18 of optical element 1 and from the emitting surface 19 thereof, it can be expressed as θ₄ = g(θ₁). When, for example, the incidence angle θ₁ is sufficiently small and an approximation can be made as θ₁ = nθ₂, and nθ₃ = θ₄, it can be expressed as θ₄ = (n-1) θ₁.

As described above, the distributed light distribution of the emitted light, i.e., the intensity distribution of the light emitting angle θ₄ becomes a relation that is 1:1 with the frequency distribution of the incidence angle θ₁. Moreover, as illustrated in FIG. 3, since the incidence angle θ₁ is consistent with the inclination angle (a gradient) of the concavo-convex surface of the optical element 1, the frequency distribution of the incidence angle θ₁ corresponds to the frequency distribution of the inclination angle of the concavo-convex surface of optical element 1. FIG. 4 illustrates a relation between the inclination angle θ₁ of the concavo-convex surface of the incidence surface and the light emitting angle θ₄ of light from the optical element 1 when the emitting surface is a plane and the concavity-and-convexity is present in the incidence surface.

Moreover, a partial differential of z relative to x and y that is ∂z/∂x|_{y = yo} and ∂z/∂y|_{x = xo}, respectively, represents an inclination when cut at a plane of y = yₒ and x = xₒ, respectively. Hence, providing that the incidence angle at a plane y = yₒ and the incidence angle at a plane x = xₒ when light perpendicularly enters the incidence surface of the optical element 1 are θᵢₓ and θ_{iy}, since it is tanθᵢₓ = ∂z/∂x|_{y = yo} and tanθ_{iy} = ∂z/∂y|_{x = xo}, it can be expressed as θᵢₓ = arctan (∂z/∂x|_{y = yo}) and θ_{iy} = arctan (∂z/∂y|_{x = xo}).

Conversely, when it is defined that the light emitting angle at the plane y = yₒ and the light emitting angle at the plane x = xₒ when light is emitted and outgoes from the optical element 1 are defined as θₒₓ and θ_{oy}, respectively, as described above, since Snell's law is satisfied between the incidence angle θᵢₓ and the light emitting angle θₒₓ and between the incidence angle θ_{iy} and the light emitting angle θ_{oy}, it can be expressed as θₒₓ = g(θᵢₓ) and θ_{oy} = g(θ_{iy}).

Moreover, a distributed light intensity h(θₒ) of the emitted light becomes, when applying a frequency function FREQUENCY (θ) of θₒ, h (θₒ) = FREQUENCY(θₒ). Hence, when these relations are combined, a distributed light intensity distribution h(θₒₓ) in the x-direction becomes h(θₒₓ) = FREQUENCY (θₒₓ) = FREQUENCY(g(θᵢₓ)) = FREQUENCY(g(arctan(∂z/∂x|_{y = yo}))).

Similarly, a distributed light intensity distribution h(θ_{oy}) in the y-direction becomes h(θ_{oy}) = FREQUENCY(θ_{oy}) = FREQUENCY(g(θ_{iy})) = FREQUENCY(g(arctan(∂z/ ∂|_{x = xo}))).

From the above descriptions, in order to accomplish a predetermined distributed light intensity distribution, it is appropriate to design the concavity-and-convexity 11 upon calculation of the frequency distribution of the inclination angle (the gradient) of the surface of the optical element 1. In this case, it is preferable that the concavity-and-convexity 11 should be designed so as to have, when calculated by Snell's law, a region which has a gradient that causes incident light to be emitted to an area outside the diffusion range 91 and which is equal to or smaller than 5 % of the entire region, more preferably, equal to or smaller than 3 %, and further preferably, equal to or smaller than 1 %.

Note that in order to cause the optical element 1 to function as a diffuser, when it is defined that the wavelength of light entering in the optical element in vacuum is λ, the refractive index of a transparent body is n₁, and the refractive index of a medium around the transparent body is n₀, it is preferable that the concavity-and-convexity 11 should have a height that is at least equal to or greater than 2.5 times as much as λ/(n₁ - n₀), more preferably, equal to or greater than five times, and further preferably, equal to or greater than 10 times. Note that the height of the concavity-and-convexity 11 means a difference between the highest crest of the concavity-and-convexity 11 and the lowest valley thereof.

Moreover, when the concavity-and-convexity 11 has a portion where the gradient keenly changes, it is not preferable since adverse effects of diffusion, diffraction, etc., act on. Hence, it is preferable that the gradient of the concavity-and-convexity 11 should gently change. More specifically, when it is defined that the wavelength of light entering in the optical element 1 in vacuum is λ, the refractive index of a transparent body is n₁, and the refractive index of a medium around the transparent body is n₀, the concavity-and-convexity 11 is formed so as not to have a portion where the gradient changes by 180 degrees within a range in which the width is equal to or smaller than one times as much as λ/(n₁ - n₀), preferably, equal to or smaller than twice, and more preferably, equal to or smaller than three times. The width means a width in a direction perpendicular to the above-described z-axis direction (a direction parallel to the incidence surface or an emitting surface).

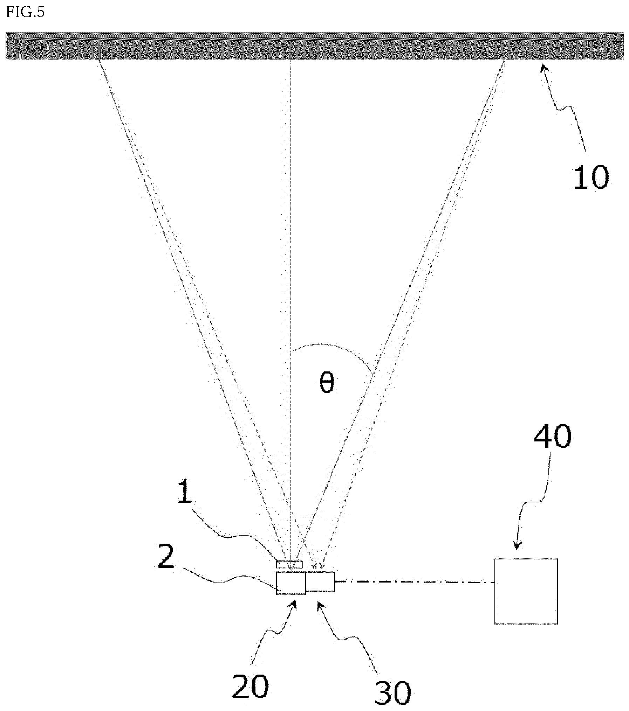

Furthermore, as illustrated in FIG. 5, a general sensor system mainly includes a light source unit 20 which includes the optical element 1 and a light source 2, and which emits light to an object 10, a camera unit 30 that detects light reflected from each point on the object 10, and an arithmetic unit 40 that calculates a distance from the object in accordance with a signal from the camera unit 30 that receives the light. The wider the angle of the reflection of light that enters the camera unit 30 is, the lower the light intensity becomes. Hence, in order to allow the camera to well sense incident light at wide angle, regarding the light distribution of the light source unit 20, it is preferable that the larger the angle θ is, the higher the light intensity should be. That is, regarding the distribution of the light distribution at a far field from the light source unit 20, it is preferable that the larger the angle θ is, the higher the intensity should become. Hence, it is preferable that the concavity-and-convexity 11 of the optical element 1 should be formed in such a way that the distributed light distribution calculated by Snell's law monotonically increases from the center of the diffusion range 91 toward the boundary thereof. For such a purpose, as described above, the concavity-and-convexity 11 may be designed in such a way that the frequency distribution of the inclination monotonically increases along with the increase of the inclination.

Note that in this specification, the center of the diffusion range 91 means a position of an intersection between the optical axis of the light source 2 and the diffusion range 91 when light from the light source 2 is perpendicularly emitted to the optical element 1 of the present disclosure. Moreover, the boundary of the diffusion range 91 means a portion corresponding to the above-described closed curved line 92 and the position of the maximum peak in the distributed light intensity distribution in the cross-section.

Furthermore, in an optical system in which light output by the light source 2 is reflected by a screen and returns to a camera, assuming that the reflection at the screen is Lambertian reflection, in order to make the intensity of light returning to the camera uniform relative to the angle θ, it is necessary to cause the light intensity distribution P(θ) at a far field from the light source unit 20 to be proportional to cos⁻⁷θ, i.e., [P(θ)^{∝}cos⁻⁷θ]. Hence, it is the most preferable that the distributed light distribution of light which is output by the light source 2 and which passes through the optical element 1 should be proportional to cos⁻⁷θ.

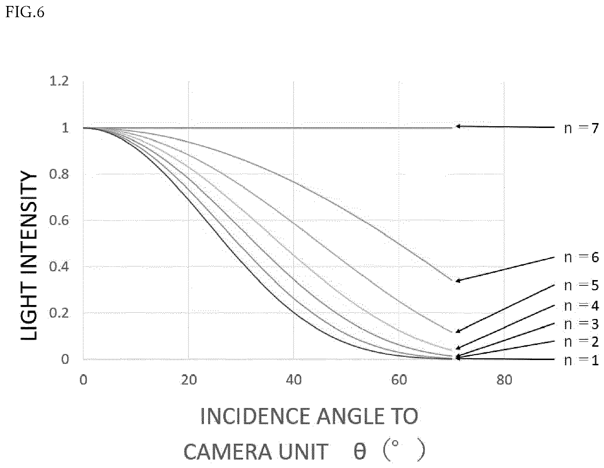

FIG. 6 is a graph showing a calculated intensity of light returning to the camera unit relative to the incidence angle θ when the light intensity distribution P(θ) at a far field from the light source unit 20 is caused to be proportional to cos⁻ⁿθ (where n is 1 to 7), i.e., [P(θ)^{∝}cos⁻ⁿθ] in an optical system in which light output by the light source unit 20 is reflected by a screen and returns to a camera. It becomes clear that the larger n is, the smaller the difference becomes although the larger the incidence angle is, the light intensity is small. Moreover, it also becomes clear that, when the light intensity distribution P(θ) is caused to be proportional to cos⁻⁷θ, i.e., [P(θ)^{∝}cos⁻⁷θ], the intensity of light returning to the camera becomes uniform relative to the angle θ.

When, however, light is emitted so as to spread at wide angle, it is difficult to cause the light intensity distribution to be fully proportional to cos⁻⁷θ. Hence, a light intensity distribution that is caused to be proportional to cos⁻ⁿθ (where 1 ≤ n ≤ 7) in the sensitivity of the camera is also acceptable.

Hence, it is preferable that the concavity-and-convexity 11 of the optical element 1 should be formed in such a way that the calculated distributed light distribution by Snell's law is proportional to cos⁻ⁿθ (where 1 ≤ n ≤ 7) from the center of the diffusion range 91 toward the boundary thereof, and more preferably, proportional to cos⁻⁷θ. Accordingly, the frequency distribution of the inclination of the concavity-and-convexity 11 of optical element 1 is formed so as to be proportional to cos⁻ⁿθ (where 1 ≤ n ≤ 7), and preferably, is formed so as to be proportional to cos⁻⁷θ.

More specifically, if h(θₒₓ) is proportional to cos⁻ⁿ θₒₓ in -a ≤ θₒₓ ≤ a, it becomes FREQUENCY(g(arctan(∂z/∂x|_{y = yo}))) = cos⁻ⁿθₒₓ = cos⁻ⁿ(g(arctan(∂z/ ∂x|_{y = yo}))). Similarly, if h(θ_{oy}) is proportional to cos⁻ⁿθ_{oy} in -b ≤ θ_{oy} ≤ b, it becomes FREQUENCY(g(arctan(∂z/ ∂y|_{x = xo}))) = cos⁻ⁿθ_{oy} = cos⁻ⁿ(g(arctan(∂z/ ∂y|_{x = xo}))).

Moreover, as described above, when Snell's law is satisfied, the incidence angle θ₁ is sufficiently small, and approximation can be made as θ₁ = n θ₂ and n θ₃ = θ₄, since θ₄ = (n-1) θ₁, it can be expressed as θᵢ = (n-1)θₒ. Hence, it becomes FREQUENCY((n-1)(arctan(∂z/∂x|_{y = yo}))) = cos⁻ⁿθₒₓ = cos⁻ⁿ((n-1)arctan(∂z/∂x|_{y = yo})). Similarly, it becomes FREQUENCY((n-1)(arctan(∂z/∂y|_{x = xo}))) = cos⁻ⁿθ_{oy} = cos⁻ⁿ((n-1)arctan(∂z/∂y|_{x = xo})).

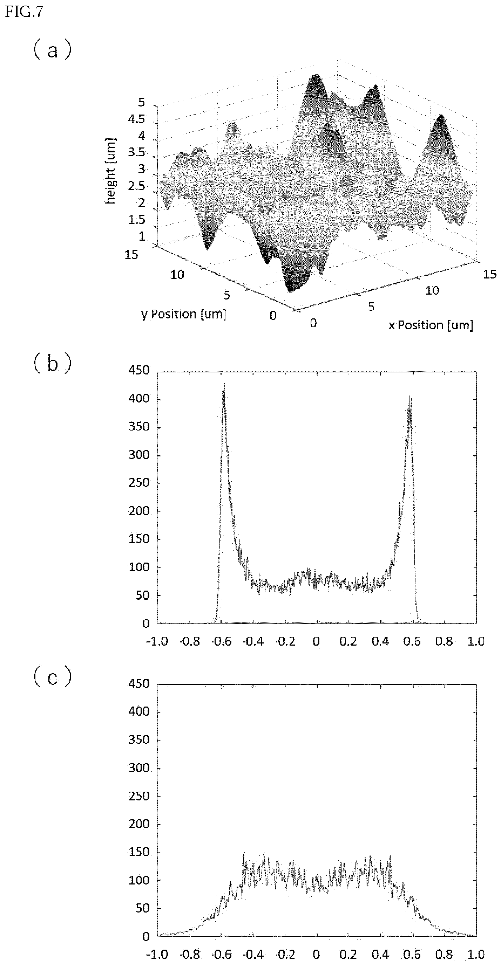

Furthermore, when it is utilized as a component of a mobile system like 3D sensing of a smartphone, it is preferable that the size of the diffusing filter (Diffuser) should be small. Still further, it is preferable that the unevenness of the concavity-and-convexity 11 should be small with the easiness of molding and the productivity being taken into consideration. When, however, a pattern size is scaled down and the size of the crest and that of the valley becomes close to the wavelength of light, the characteristic of light as wave becomes unignorable, and thus a correction as wave becomes necessary in structural designing to obtain a desired distributed light distribution. This will be described with reference to FIG. 7 to FIG. 12.

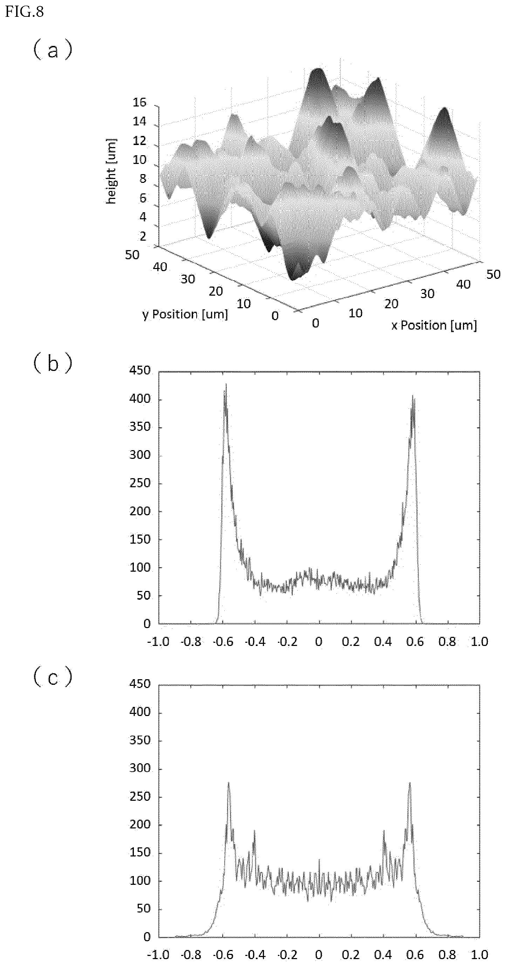

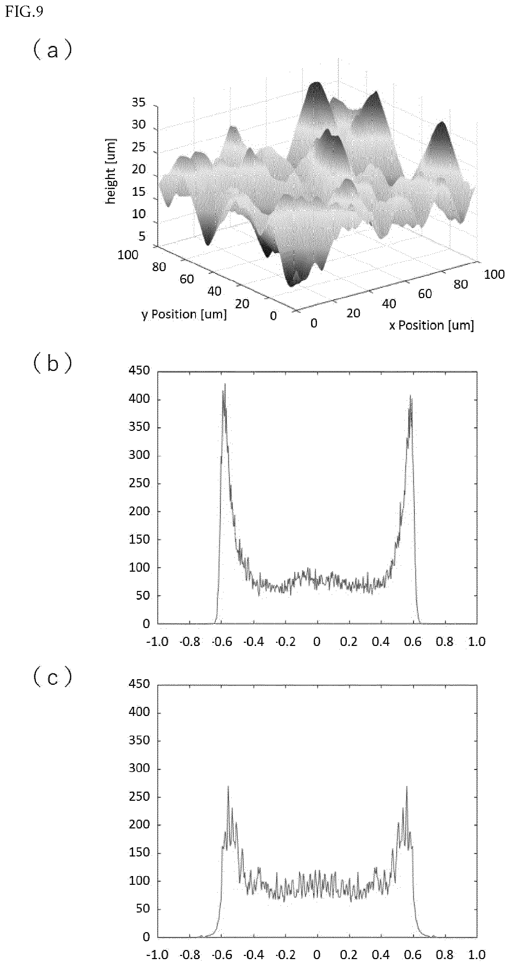

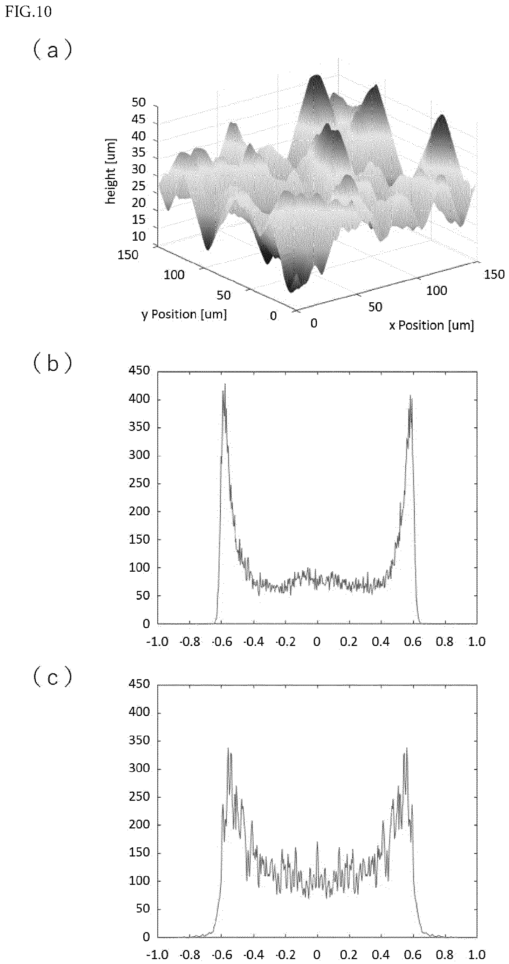

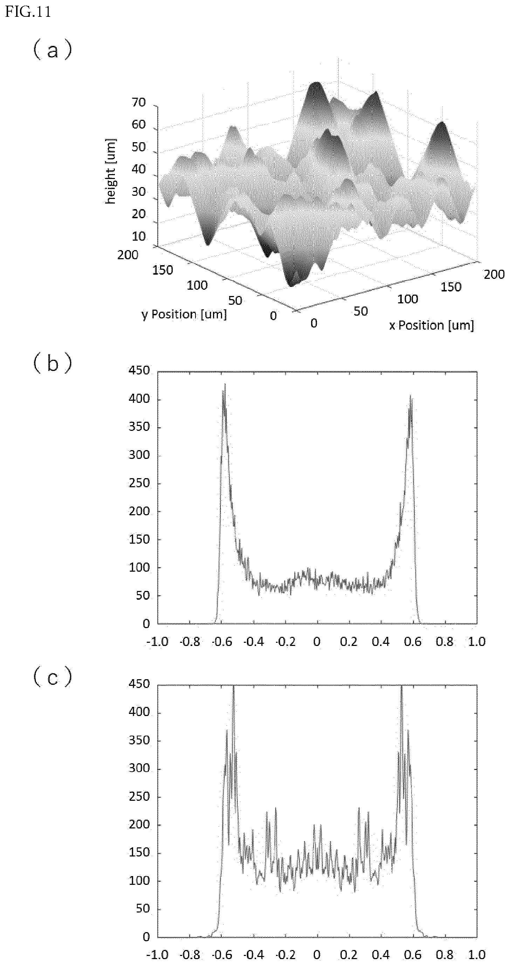

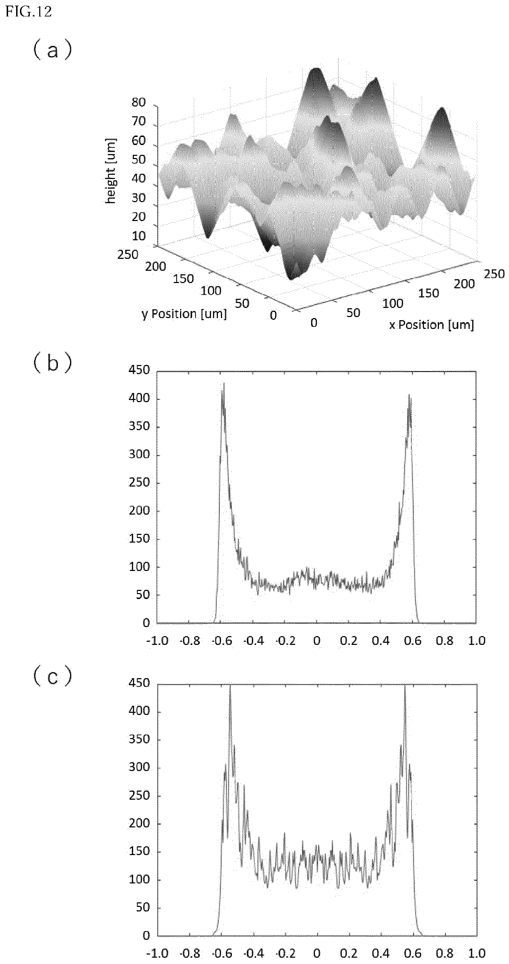

when it is defined that the wavelength of light entering in the optical element 1 in vacuum is λ, the refractive index of a transparent body is n₁, and the refractive index of a medium around the transparent body is n₀, respective parts (a) of FIG. 7 to FIG. 12 illustrate the optical element 1 which is similar and which has six kinds of the concavity-and-convexity 11 such that the height of the concavity-and-convexity 11 is equal to or smaller than five times as much as λ/(n₁-n₀) (FIG. 7), equal to or greater than 10 times (FIG. 8), equal to or greater than 25 times (FIG. 9), equal to or greater than 40 times (FIG. 10), equal to or greater than 50 times (FIG. 11), and equal to or greater than 65 times (FIG. 12). In this case, the refractive index n₁ of the optical element 1 was set to be 1.53, and the refractive index n₀ was set to be 1. Moreover, the wavelength of incident light to the optical element 1 was set to be 630 nm. Furthermore, the concavity-and-convexity 11 that has the distributed light distribution proportional to cos⁻⁷θ was applied. Note that the height of the concavity-and-convexity 11 means the difference between the highest crest of the concavity-and-convexity 11 and the lowest valley thereof. Respective parts (b) of FIGS. 7 to 12 are each a ray-trace simulation result with the characteristic as wave being ignored. Respective parts (c) of FIGS. 7 to 12 are each a result obtained by electromagnetic field simulation with the characteristic as wave being taken into consideration.

It becomes clear that, upon simulation results by a refracting optical system, even if the size of the concavity-and-convexity 11 differs according to the ray tracing simulation with a refraction optical system, there is no change in the distributed light distribution, but according to the electromagnetic field simulation, the distributed light distribution changes according to the size of the concavity-and-convexity 11. More specifically, the smaller the size of the concavity-and-convexity 11 is, the greater the wave-optical effect becomes, and thus the difference in the distributed light distribution increases between the ray tracing simulation and the electromagnetic field simulation. Hence, the larger concavity-and-convexity 11 is preferable since it can reduce the effect of the characteristic of light as wave. More specifically, it is preferable that the concavity-and-convexity 11 should have a height that is at least equal to or greater than five times as much as λ/(n₁-n₀), more preferably, equal to or greater than 10 times, and further preferably, equal to or greater than 25 times.

Note that, in the above description, although the description has been given of a case in which the emitting surface is a plane and the incidence surface has the concavity-and-convexity, inversely, the incidence surface may be a plane and the emitting surface may have the concavity-and-convexity. Moreover, it is unnecessary that either one surface is a plane as far as designing can be made so as to cause incident light to be emitted within the diffusion range 91 by Snell's law, and such a surface may be a curved surface, such as an arch-like shape or a spherical shape, or the concavity-and-convexity may be formed on both surfaces.

Next, an optical system device according to the present disclosure will be described. As illustrated in FIG. 5, the optical system device of the present disclosure mainly includes the above-described optical element 1 of the present disclosure, and a light source 2 that emits light to the optical element 1.

According to the above-description, although the light source 2 is to emit collimated light, the present disclosure is not limited to this example, and such a source is not limited to any particular one as far as it can emit light to the optical element 1. For example, a Vertical Cavity Surface Emitting Laser (VCSEL) or an LED is applicable. It is appropriate that the light source 2 is placed so as to emit light of the light source 2 to the optical element 1.

Moreover, the optical system device of the present disclosure may include a camera unit 30 that detects reflected light from each point on an object 10, and an arithmetic unit 40 that calculates the distance from the object in accordance with a signal from the camera unit 30 that receives the light.

### REFERENCE SIGNS LIST

- 1: Optical element
- 2: Light source
- 11: Concavity-and-convexity
- 91: Diffusion range
- 92: Closed curved line

## Claims

1. An optical element capable of diffusing incident light to a predetermined diffusion range, the optical element comprising:
a transparent body that comprises concavity-and-convexity on at least one surface,
wherein:
the diffusion range is defined as an internal side of a singular closed curved line on a predetermined plane;
the concavity-and-convexity includes a plurality of crests and valleys without a periodicity;
when a wavelength of the light is defined as λ, a refractive index of the transparent body is defined as n₁, and a refractive index of a medium around the transparent body is defined as n₀, the concavity-and-convexity has no portion where a gradient of the concavity-and-convexity changes by 180 degrees within a range in which a width is λ/(n₁ - n₀); and
a region of the concavity-and-convexity with the gradient that causes the incident light to be emitted and outgo to a region outside the diffusion range by Snell's law is equal to or smaller than 5 % of an entire region.

2. The optical element according to claim 1,
wherein the concavity-and-convexity is formed in such a way that distributed light distribution calculated by Snell's law monotonically increases from a center of the diffusion range toward a boundary thereof.

3. The optical element according to claim 2,
wherein the concavity-and-convexity is formed in such a way that the distributed light distribution calculated by Snell's law becomes proportional to cos⁻ⁿθ (where 1 ≤ n ≤ 7) from the center of the diffusion range toward the boundary thereof.

4. The optical element according to any one of claims 1 to 3, wherein the concavity-and-convexity has a height that is equal to or greater than 2.5 times as much as λ/(n₁ - n₀).

5. An optical system device comprising:
the optical element according to any one of claims 1 to 4; and
a light source that emits light to the optical element.
